# EUROPEAN PATENT SPECIFICATION

(11) **EP 2 441 871 B1**
(45) Date of publication and mention of the grant of the patent: **07.10.2015**
(21) Application number: 11177881.7
(22) Date of filing: 18.08.2011
(51) Int. Cl.: D06F 33/02, D06F 39/00

(54) **Control method of washing machine**
Steuerverfahren für eine Waschmaschine
Procédé de commande de machine à laver

(30) Priority: 13.10.2010 KR 20100099942
(43) Date of publication of application: 18.04.2012
(73) Proprietor: Samsung Electronics Co., Ltd., Suwon-si, Gyeonggi-do, 443-742 (KR)
(72) Inventor: Kim, Hyun Sook, Gyeonggi-do (KR); Lee, Ji Yu, Incheon (KR)
(74) Representative: Grünecker Patent- und Rechtsanwälte PartG mbB

(56) References cited:
- EP-A2- 1 186 694
- WO-A2-2009/066940
- DE-A1- 4 202 656
- US-A1- 2001 049 846
- US-A1- 2004 267 473

## Description

### BACKGROUND

### 1. Field

Embodiments relate to a control method of a washing machine which controls an operating course.

### 2. Description of the Related Art

In general, washing machines are apparatuses which apply energy, such as impact, to laundry to remove contaminants therefrom. Washing machines are divided into pulsator washing machines, agitator washing machines, and drum washing machines according to the way in which energy is applied to laundry.

A pulsator washing machine washes laundry using a water current obtained by rotating a disc-shaped pulsator, an agitator washing machine washes laundry by rotating a blade-shaped agitator protruded from the center of a washing tub in leftward and rightward directions, and a drum washing machine washes laundry by applying impact to the laundry through tumbling thereof within a rotating drum.

A washing machine performs a washing cycle to wash laundry with water in which a detergent is dissolved, a rinsing cycle to rinse the laundry with clean water, and a spin-drying cycle to remove water from the laundry.

Such a washing machine performs the respective cycles without consideration of kinds of the contamination and interaction with the detergent under the condition that defects, such as fraying and fading, frequently occur during washing of the laundry, thus being incapable of achieving effective washing of the laundry.

Further, since the washing machine performs the respective cycles according to one selected from operating courses, which are set in advance, by a user, washing of the laundry according to specific contamination characteristics thereof may be impossible.

Such a washing machine does not correctly recognize various kinds of contamination, which are combined and present in the laundry, thus reducing washing efficiency and utility thereof.

US 2001/049846 A1 discloses a washing machine with one or more sensors sensing environmental conditions and/or sensing one or more soiled article characteristics derived from one or more soiled articles. Consumer feedback data may be submitted to the washing machine and processing factors, as for example, color, fabric type, description of garment, date of manufacture, water temperature, or the like, are used for treatment of the laundry.

US 2004/267473 A1 discloses a non-aqueous laundering apparatus, wherein a number of data or the like is received, for example, fabric type, type of stains, level of soiling, level of odor, or the like. Moreover, based on those data, the operation of the device and the laundering of the fabric articles are determined.

EP 1 186 694 A2 discloses a control of a laundry appliance, wherein various washing conditions are possible, which are set according to, for example, weight, degree of soiling, cloth quality, type of detergent or the like. Other information can also be considered as weather information for the region, water quality, or the like.

WO 2009/066940 A2 discloses a method and an apparatus for treating laundry, wherein there is a possibility of receiving user manipulation signals by an input unit actuated by the user. Some data or parameters, which are considered for the operating course, such as weight of laundry, hardness of wash water, and the like, are used for selecting operating conditions for performing the washing operation.

### SUMMARY

Therefore, it is an object of the present invention to provide a control method of a washing machine in which, when purpose data of laundry are received, an operating course is determined based on the received purpose data of the laundry.

A contamination degree of wash water during operating of the washing machine in an operating course is based on purpose data of laundry and then at least one of mechanical power applied to remove contamination during a washing cycle, such as an operation factor of a motor and an RPM of the motor, a washing time, a washing temperature, an amount of wash water, a frequency of times of rinsing, an amount of rinse water, and a spin-drying velocity may be adjusted.

Additional aspects will be set forth in part in the description which follows and, in part, will be apparent from the description, or may be learned by practice of the invention.

Advantageous embodiments are disclosed by the subclaims.

The receipt of the purpose data of the laundry may include receiving a signal from an operation unit operated by a user.

The receipt of the purpose data of the laundry may include recognizing a clothing data storage device attached to the laundry, and receiving data from the recognized clothing data storage device.

The control method may further include determining at least one of kinds of detergents and amounts of the detergents based on the predicted material of the laundry and the predicted kind and amount of contamination.

The control method may further include displaying at least one of the determined kinds and amounts of the detergents and the determined operating course.

The purpose data of the laundry may include at least one data of a kind of the laundry and a size of the laundry or, if the kind of the laundry corresponds to clothing, at least one data of data of a wearer of the clothing, wearing pattern data, and wearing purpose data.

The prediction of the amount of contamination of the laundry may include detecting a weight of the laundry, and predicting the amount of contamination of the laundry based on the weight of the laundry.

The determination of the operating course may include determining at least one of an amount of wash water, a washing time, an RPM and an operation factor of a motor during washing, a washing temperature, a frequency of times of rinsing, an amount of rinse water, a spin-drying velocity, and a spin-drying time based on the material of the laundry and the kind and amount of contamination.

The control method may further include receiving at least one data of weather, date, and season data from a user, and predicting at least one of a material of the laundry, a kind of contamination of the laundry, and an amount of contamination of the laundry based on the at least one data of the weather, date, and season data.

The control method may further include receiving at least one data of weather, date, and season data from external equipment through communication, and predicting at least one of a material of the laundry, a kind of contamination of the laundry, and an amount of contamination of the laundry based on the at least one data of the weather, date, and season data.

The control method may further include judging at least one data of date and season data based on timer data, and predicting at least one of a material of the laundry, a kind of contamination of the laundry, and an amount of contamination of the laundry based on the at least one data of the date and season data.

The control method may further include determining kinds and amounts of detergents based on the purpose data of the laundry, and discharging the determined amounts of the detergents by adjusting discharge of the determined amounts of the detergents.

The determination of the kinds and amounts of the detergents may include predicting a kind of contamination of the laundry and an amount of contamination of the laundry based on the purpose data of the laundry, and determining the kinds and amounts of the detergents based on the predicted kind and amount of contamination.

The control method may further include detecting a contamination degree during control of washing of the laundry according to the determined operating course, and adjusting at least one of an RPM and an operation factor of a motor during a washing cycle, a washing time, a washing temperature, a frequency of times of a rinsing cycle, an amount of rinse water, and a spin-drying velocity based on the contamination degree.

The control method may further include detecting a contamination degree of wash water during the washing cycle, comparing the detected contamination degree with a predicted contamination degree, which is predetermined, and adjusting at least one of the washing cycle and the rinsing cycle if the detected contamination degree exceeds the predicted contamination degree.

The adjustment of at least one of the washing cycle and the rinsing cycle may adjusting at least one of the washing time and the frequency of times of rinsing, and displaying the adjusted at least one of the washing time and frequency of times of rinsing.

The control method may further include detecting a contamination degree of wash water during the washing cycle, comparing the detected contamination degree with a first predicted contamination degree, which is predetermined, and additionally adjusting the washing time during the washing cycle if the detected contamination degree exceeds the first predicted contamination degree.

The control method may further include detecting a contamination degree of rinse water during the rinsing cycle, comparing the detected contamination degree with a second predicted contamination degree, which is predetermined, and additionally adjusting the frequency of times of the rinsing cycle if the detected contamination degree exceeds the second predicted contamination degree.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is an exemplary view of a washing machine in accordance with one embodiment;
FIG. 2 is a control block diagram of the washing machine in accordance with the embodiment;
FIG. 3 is a flow chart illustrating a control method of the washing machine in accordance with the embodiment;
FIG. 4 is a control block diagram of a washing machine in accordance with another embodiment; and
FIG. 5 is a flow chart illustrating a control method of the washing machine in accordance with the embodiment.

### DETAILED DESCRIPTION

Reference will now be made in detail to the embodiments, examples of which are illustrated in the accompanying drawings, wherein like reference numerals refer to like elements throughout.

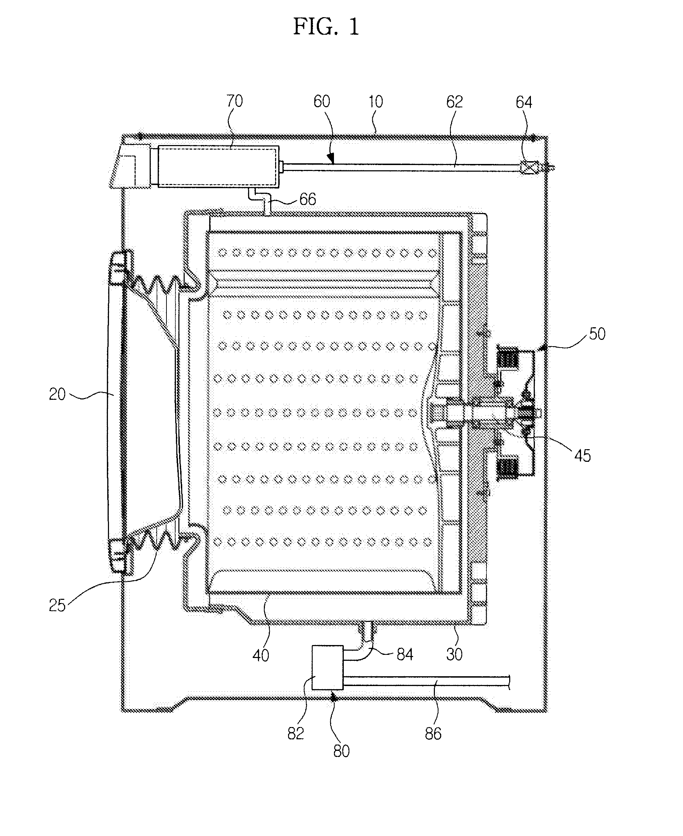

FIG. 1 is an exemplary longitudinal-sectional view of a washing machine in accordance with one embodiment. Here, a drum washing machine will be exemplarily described.

The drum washing machine includes a main body 10, a door 20, a tub 30, a drum 40, a motor 50, a water supply device 60, a detergent box 70 and a drain device 80.

The main body 10 forms the external appearance of the drum washing machine, and an inlet through which laundry is put into and taken out of the main body 10 is formed through one surface of the main body 10. The door 20 to open and close the inlet is mounted on the main body 10, and a gasket 25 to seal a gap between the door 20 and the inlet is installed around the inlet.

The tub 30 is fixedly installed in the main body 10, and receives wash water supplied from the water supply device 60. The motor 50 to rotate the drum 40 is mounted at the outside of the tub 30.

The drum 40 has a shape corresponding to the shape of the tub 30, and is installed in the tub 30. A rotary shaft 45 is mounted on the outer surface of the drum 40, and is extended to the outside of the tub 30 and connected to the motor 50 mounted at the outside of the tub 30. Thereby, the drum 40 is rotated within the tub 30 in the clockwise or counterclockwise direction.

One surface of the drum 40 is opened, and the remaining surfaces of the drum 40 are provided with a plurality of holes. When the door 20 is opened, laundry is put into the drum 40 through the opened surface of the drum 40, and wash water is introduced into the drum 40 through the plurality of holes formed through the remaining surfaces of the drum 40.

The motor 50 is rotated when weight of the laundry is sensed and when the washing, rinsing, and spin-drying cycles are performed, and thus rotates the drum 40 by means of rotary force generated due to the rotation of the motor 50, thereby performing washing, rinsing, and spin-drying of the laundry received in the drum 40.

The water supply device 60 includes water supply pipes 62 and 66 and a water supply valve 64.

Here, the water supply pipe 62 is provided with one end connected to an external water supply pipe (not shown) and the other end connected to the detergent box 70, and receives water supplied from the external water supply pipe and then guides the water to the detergent box 70.

The water supply pipe 66 is disposed between the detergent box 70 and the tub 30, and guides the water supplied from the external water supply pipe to the tub 30 and the drum 40 together with detergents in the detergent box 70.

The water supply valve 64 is opened and closed during the washing and rinsing cycles, thereby adjusting supply of water to the tub 30 and the drum 40.

The detergent box 70 stores detergents put into the detergent box 70 by a user. The detergent box 70 serves as a channel into which water is introduced through the water supply pipe 62 and from which a mixture of the introduced water and the detergents is discharged to the water supply pipe 66.

The detergent box 70 may be provided with a detergent amount adjustment unit (not shown). Here, the detergent amount adjustment unit (not shown) adjusts amounts of the detergents stored in the detergent box 70, and then discharges the adjusted amounts of the detergents to the outside of the detergent box 70. That is, the detergent amount adjustment unit (not shown) adjusts the amounts of the detergents stored in the detergent box 70 and then supplies the adjusted amounts of the detergents into the drum 40.

The drain device 80 includes a pump 82 and drain pipes 84 and 86. Here, the pump 82 pumps out water in the tub 30 and the drum 40 during draining and spin-drying cycles, the drain pipe 84 is provided under the tub 30 such that wash water is introduced into the drain pipe 84 during pumping-out of the pump 82, and the drain pipe 86 guides the wash water, introduced into the drain pipe 84 during pumping-out of the pump 82, to the outside of the main body 10, thereby discharging the wash water to the outside of the main body 10.

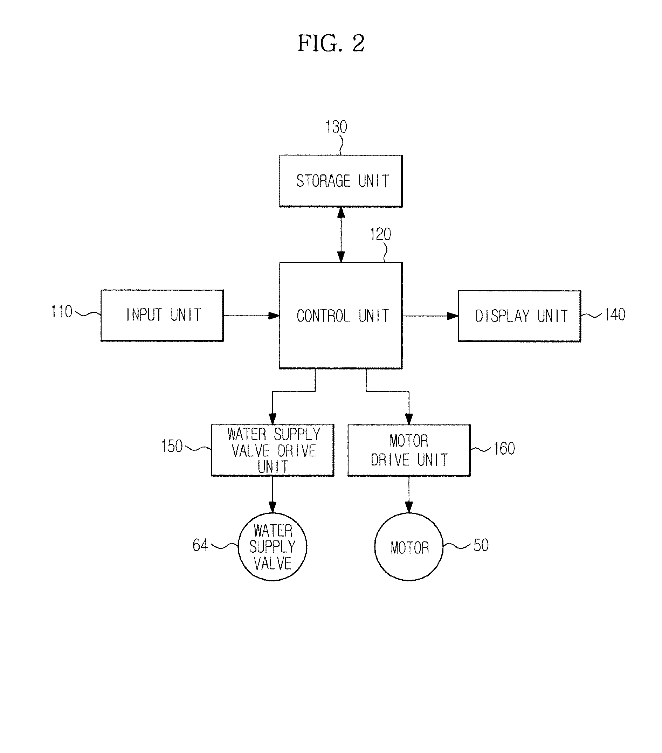

FIG. 2 is a control block diagram of the washing machine in accordance with the embodiment. The washing machine includes an input unit 110, a control unit 120, a storage unit 130, a display unit 140, a water supply valve drive unit 150, and a motor drive unit 160.

The input unit 110 receives purpose data of laundry and weather, data or season data, and transmits the received data to the control unit 120.

Here, the purpose data of laundry include kinds of laundry, such as clothing, towels and bedding, and further include data of wearers and wearing purposes and wearing pattern data, in the case of clothing.

Among the purpose data of laundry, clothing includes outdoor clothes, work clothes, ordinary clothes, sportswear, underwear, socks and so on according wearing purposes. Further, work clothes include medical gowns, cosmetic gowns, aprons, military uniforms, police uniforms, school uniforms, dress shirts, repairman uniforms and so on, and sportswear includes fitness club uniforms, soccer uniforms, mountaineering wear, baseball uniforms and so on.

Here, the wearing purposes of clothing are used to predict both a material of laundry and a kind of contamination of the laundry.

Further, accuracy in prediction of the material according to the current date or season data may be increased. For example, when a wearing purpose of laundry representing outdoor clothes is received under the condition that the current season is winter, the material of the received outdoor clothes is predicted to be wool, which is generally used for winter outdoor clothes.

The wearing pattern data includes data, such as wearing times of clothing according to seasons prior to washing.

Here, age data is used to judge whether or not a wearer is an infant under the age of 1, a toddler between the ages of 1 to 6, a child under the age of 18, or an adult over the age of 18, and serves as a factor to determine kinds or amounts of detergents used for each age group, to predict a size of clothing, and to recognize a material of the clothing.

Further, since the kind and amount of main contamination are varied due to a difference between life environments of ages, the age data serves as a factor to predict the kind and amount of contamination.

The purpose data of laundry further include size data of laundry. Here, the size data of laundry is considered when the amount of contamination is predicted. The size data of laundry may be predicted based on the age data of the wearer.

Such an input unit 110 may be at least one of an operation unit (not shown) to receive the purpose data directly from a user, a barcode recognition unit (not shown) to recognize a clothing data storage device attached to laundry, i.e., a barcode, a QR code recognition unit to recognize a quick response (QR) code attached to laundry, and an image unit to obtain an image of laundry.

Here, the operation unit includes a keypad, buttons, or a touch screen. The operation unit receives the purpose data of laundry through operation of a user, and then transmits an operation signal corresponding to the received purpose data to the control unit 120.

The barcode recognition unit recognizes a barcode attached to laundry and then transmits data of the recognized barcode to the control unit 120. Here, the barcode attached to the laundry may include a product name, a material, a size, and a washing method of the laundry. Alternatively, the input unit 110 may receive the material of the laundry directly from the user.

Further, the input unit 110 receives the current date, season and weather data from the user and transmits a signal corresponding to the received data to the control unit 120.

The current date, season and weather data may be obtained from a timer (not shown) provided within the washing machine. Alternatively, the current date, season and weather data may be received in real time through wired/wireless data communication with external equipment.

The control unit 120 judges a kind of the laundry based on the purpose data of the laundry transmitted from the input unit 110 and predicts a material of the laundry and a kind and amount of contamination of the laundry. Here, the control unit 120 may consider the current date, season and weather data during prediction of the material of the laundry and the kind and amount of contamination of the laundry.

Further, if the barcode recognition unit or the QR code recognition unit is used as the input unit 110, the control unit 120 reads a barcode recognized by the barcode recognition unit or a QR code recognized by the QR code recognition unit, finds out the kind, material and size of the laundry according to the product name of the laundry and predicts the kind and amount of contamination based on the above kind, material and size of the laundry.

Further, if the image unit is used as the input unit 110, the control unit 120 processes an image obtained from the image unit and predicts the material and size of the laundry and the kind and amount of contamination from the processed image. Here, the size is considered to predict the amount of contamination.

The control unit 120 determines an operating course corresponding to the kind, material and size of the laundry and the kind and amount of contamination, controls driving of the display unit 140 so as to display the determined operating course and controls driving of the water supply valve 64 and the motor 50 based on the determined operating course, thereby performing the washing cycle, the rinsing cycle and the spin-drying cycle corresponding to the determined operating course.

Further, the control unit 120 judges kinds and amounts of detergents and a washing temperature corresponding to the kind and material of the laundry and the kind and amount of contamination and controls driving of the display unit 140 so as to display at least one of the judged kinds and amounts of the detergents and the judged washing temperature.

Thereby, a user puts the corresponding detergents into the detergent box 70.

The control unit 120 controls driving of a detergent amount adjustment unit (not shown) and thus adjusts amounts of the discharged detergents, thereby allowing the corresponding detergents to be discharged from the detergent box 70 to the drum 40.

Further, the control unit 120 receives the purpose data of the laundry transmitted from the input unit 110 and controls driving of the motor 50 to rotate the drum 40, thereby detecting a weight of the laundry. Then, the control unit 120 predicts an amount of the contamination of the laundry based on the detected weight of the laundry.

The storage unit 130 stores operating courses set in consideration of relationship among kinds of laundries, materials of laundries, kinds of contamination and amounts of contamination, and stores kinds of detergents, amounts of the detergents and optimum washing temperatures set in consideration of relationship among the kinds and materials of laundries and the kinds and amounts of contamination.

Here, the operating course includes at least one data selected from mechanical power during the washing cycle, such as an operation factor of the motor and an RPM of the motor, a wash water temperature, a washing time, an amount of wash water, a frequency of times of rinsing, an amount of rinse water, an intermediate spin-drying velocity, a final spin-drying velocity, an intermediate spin-drying time and a final spin-drying time.

The display unit 140 displays the operating course according to instructions of the control unit 120, displays the amounts and kinds of the detergents and the washing temperature and displays a cycle which is being performed now, during the operating course.

The water supply valve drive unit 150 transmits an ON or OFF signal to the water supply valve 64 according to instructions of the control unit 120 so as to switch the water supply valve 64 on or off, thereby allowing wash water or rinse water to be supplied into the tub 30 and the drum 40 during the washing cycle or the rinsing cycle.

Here, an amount of wash water or rinse water supplied into the tub 30 and the drum 40 is determined according the material of the laundry and the kind and amount of contamination.

The motor drive unit 160 transmits a drive signal to the motor 50 according to instructions of the control unit 120 to rotate the motor 50, thereby allowing the drum 40 to be rotated when the weight of the laundry is detected or when the washing cycle, the rinsing cycle or the spin-drying cycle is performed.

Here, a washing, rinsing or spin-drying level according to the rotary force of the drum 40 is determined according to the material of the laundry and the kind and amount of contamination.

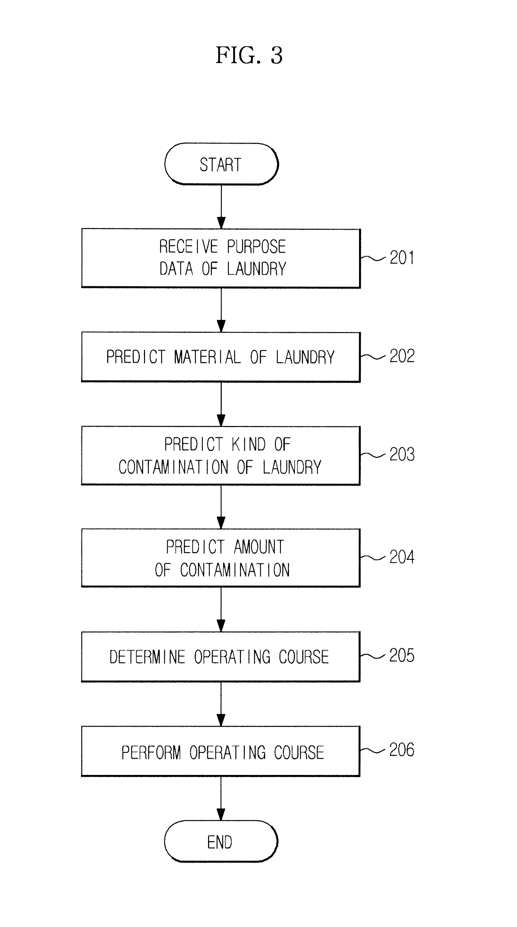

FIG. 3 is a flow chart illustrating a control method of the washing machine in accordance with the embodiment. Hereinafter, the control method will be described with reference to FIGS. 1 and 2.

First, when power is supplied to the washing machine, the display unit 140 displays a message requesting that purpose data of laundry be input.

Thereafter, the control unit 120 receives the purpose data of the laundry and weather, date and season data through corresponding buttons designed such that the respective items are received through the buttons (operation 201). Here, the corresponding buttons are provided separately from buttons displayed on the touch screen or the display unit. Further, the washing machine may receive the purpose data of the laundry through operation of the keypad by a user.

Here, the current date and season data may be obtained from the timer (not shown) provided within the washing machine. Here, the current season is judged based on the date data obtained from the timer.

Further, the weather, date and season data may be received in real time through wired/wireless data communication with external equipment.

The purpose data of laundry received by the control unit 120 include kind data of laundry, such as clothing, towels and bedding, and size data of laundry, and further include data regarding ages of wearers, wearing purposes and wearing pattern, if the kind of laundry corresponds to clothing.

Among the purpose data of laundry, clothing is divided into outdoor clothes, work clothes, ordinary clothes, sportswear, underwear, socks and so on according wearing purposes. Work clothes are divided into medical gowns, cosmetic gowns, cooking gowns, military uniforms, police uniforms, school uniforms, dress shirts, repairman uniforms and so on, and sportswear is divided into fitness club uniforms, soccer uniforms, mountaineering wear, baseball uniforms and so on.

Further, the wearing pattern data includes data regarding a wearing time of clothing prior to washing.

The purpose data of the laundry may be obtained through a barcode recognition unit or a QR recognition unit. If the purpose data of the laundry are received through a barcode or a QR code of the laundry, the barcode or the QR code of the laundry may be recognized and read and the purpose data of the laundry corresponding to a product name of the laundry may be judged.

Further, the purpose data of the laundry may be obtained through an image unit. If the purpose data of the laundry is obtained through the image unit, the obtained image of the laundry may be processed and the purpose data of the laundry may be judged from the processed image of the laundry.

Thereafter, the control unit 120 predicts a material of the laundry based on the purpose data of the laundry (operation 202). Here, data stored in the storage unit 130 are used.

For example, if the kind of the laundry corresponds to a towel, the control unit 120 predicts that the material of the laundry is a material which is generally used for towels. Since towels are generally made of cotton, the control unit 120 predicts that the material of the laundry is cotton.

Further, if the kind of the laundry corresponds to clothing, the control unit 120 predicts that the material of the laundry is a material, which is generally used to manufacture the corresponding clothing based on the wearing purpose of the laundry. Here, if the clothing corresponds to mountaineering wear out of sportswear, the control unit 120 predicts that the material of the laundry is GORE-TEX™, NEOCELL™ or HIPER TEX™.

Further, if the kind of the laundry corresponds to clothing, the control unit 120 may predict a material of the clothing based on age data. For example, if it is judged that a wearer is an infant based on the age data, the control unit 120 predicts that the material of the clothing is cotton, which is generally used for infant clothing.

If the control unit 120 receives the purpose data of the laundry, the control unit 120 may predict a material of the laundry by analyzing relationship among at least one data selected from among the current date, season and weather data.

For example, if the kind of the laundry corresponds to outdoor clothes under the condition that the current season is winter, the control unit 120 predicts that the material of the laundry is a material, which is generally used for winter outdoor clothes. Here, the control unit 120 predicts that the material of the laundry is wool.

Thereafter, the control unit 120 predicts a kind of contamination of the laundry based on the purpose data of the laundry (operation 203).

Here, the control unit 120 judges whether or not the kind of contamination is water-soluble, fat-soluble, or likely to be colored.

For example, if the laundry corresponds to a towel to wash a hand or a face, the control unit 120 predicts that the kind of contamination of the towel is water or sebum, and if the laundry corresponds to clothing worn by a vehicle repairman, the control unit 120 predicts that the kind of contamination of the clothing is fat-soluble and the clothing is likely to be colored due to food.

Further, if the laundry corresponds to clothing, the control unit 120 predicts the kind of contamination according to a difference between life environments of ages based on the age data of a wearer.

For example, if the laundry corresponds to ordinary clothes, the control unit 120 predicts that the kind of contamination of infant ordinary clothes is food, soil, or dust and the kind of contamination of adult ordinary clothes is sweat.

Thereafter, the control unit 120 predicts an amount of contamination based on the purpose data of the laundry (operation 204).

That is, the control unit 120 may predict a size of the laundry through judgment as to whether the laundry corresponds to a towel to wash a hand or a face, bedding used while asleep, or clothing worn by a wearer, and predict the amount of contamination from the predicted size.

Hereinafter, various examples to predict the amount of contamination will be described.

As one example, the control unit 120 receives size data of the laundry from a user and predicts the amount of contamination based on the size data of the laundry received from the user.

As another example, if the laundry corresponds to clothing, the control unit 120 predicts the amount of contamination based on age data of a wearer. That is, if the laundry corresponds to sportswear, the control unit 120 predicts that the amount of contamination is proportional to the age of the wearer because the size of adult sportswear is greater than that of infant sportswear.

As another example, the control unit 120 predicts the amount of contamination in consideration of a wearing pattern. That is, the amount of contamination of clothing is proportional to how long the clothing is worn between washes.

As another example, the control unit 120 detects a weight of the laundry and predicts the amount of contamination based on the detected weight of the laundry.

As another example, the control unit 120 obtains at least one data selected from amount the product name, the kind and size of the laundry based on data stored in the barcode or QR code of the laundry and predicts the amount of contamination of the laundry based on the at least one obtained data.

Thereafter, the control unit 120 determines an operating course corresponding to the kind and material of the laundry and the kind and amount of contamination (operation 205), and displays the determined operating course on the display unit 140.

During determination of the operating course, the control unit 120 determines a temperature of wash water corresponding to the material of the laundry, determines amounts of the wash water and rinse water, determines respective rotating forces during the washing cycle, the rinsing cycle and the spin-drying cycle, and determines a washing time during the washing cycle, a rinsing time and a frequency of times of the rinsing cycle and a spin-drying level during the spin-drying cycle.

Here, operating courses corresponding to kinds and materials of laundries and kinds and amounts of contamination are stored in advance.

Further, the control unit 120 judges kinds of detergents based on the kind and material of the laundry and the kind and amount of contamination and determines amounts of the detergents based on the kind and material of the laundry and the amount of contamination.

Here, kinds and amounts of detergents corresponding to kinds and materials of laundries and kinds and amounts of contamination are stored in advance.

Kinds of detergents include synthetic detergents, oxygen bleaches used to clear colored clothing, chloride bleaches used to perform disinfection and to remove mold and detergents (neutral detergents) for wool used to perform dry cleaning, fabric softeners and infant detergents.

During judgment of the kinds of the detergents, the control unit 120 may determine kinds or amounts of the detergents in consideration of skin sensitivity of a wearer according to age.

For example, the control unit 120 determines that a small amount of an infant detergent is used, if the laundry corresponds to infant clothing, determines that both a synthetic detergent and a bleach are used, if the laundry corresponds to clothing that is likely to be colored, and determines that only a detergent for dry cleaning is used, if the laundry corresponds to clothing that is likely to be colored but is made of a material, such as nylon, which is faded by a chloride bleach.

Thereafter, the control unit 120 displays the judged kinds and amounts of the detergents on the display unit 140 so that a user recognizes them. Here, a proper washing temperature is also displayed on the display unit 140. Thereby, the user may select detergents suitable to wash the laundry and proper amounts of the detergents.

Further, the control unit 120 may control driving of the detergent amount adjustment unit (not shown) and thus adjust amounts of the detergents discharged to the inside of the drum 40, thereby allowing proper amounts of the detergents to be supplied to the drum 40. Here, the detergent box 70 may be divided into plural spaces into which different kinds of detergents are introduced and the detergents stored in the respective spaces are determined in advance.

Accordingly, proper amounts of the detergents are supplied according to the kind and amount of contamination, as described above, thereby preventing use of excessive amounts of the detergents and preventing poor washing effects due to insufficient amounts of the detergents. Thereby, the washing effects are improved due to use of the proper amounts of the detergents.

Thereafter, when the detergent(s) is/are put into the washing machine, the control unit 120 drives the water supply valve 64 and the motor 50 based on the operating course, thereby performing the washing cycle, the rinsing cycle and the spin-drying cycle according to the determined operating course (operation 206). Here, the control unit 120 displays the cycle of the operating course, which is carried out now, through the display unit 140.

As described above, the operating course is determined by judging the material of the laundry based on the purpose data of the laundry and predicting the kind and amount of contamination of the laundry, thereby allowing the laundry to be properly washed according to the purpose of the laundry. Further, the laundry is properly washed according to the kind and amount of contamination, thereby improving utility of the washing machine.

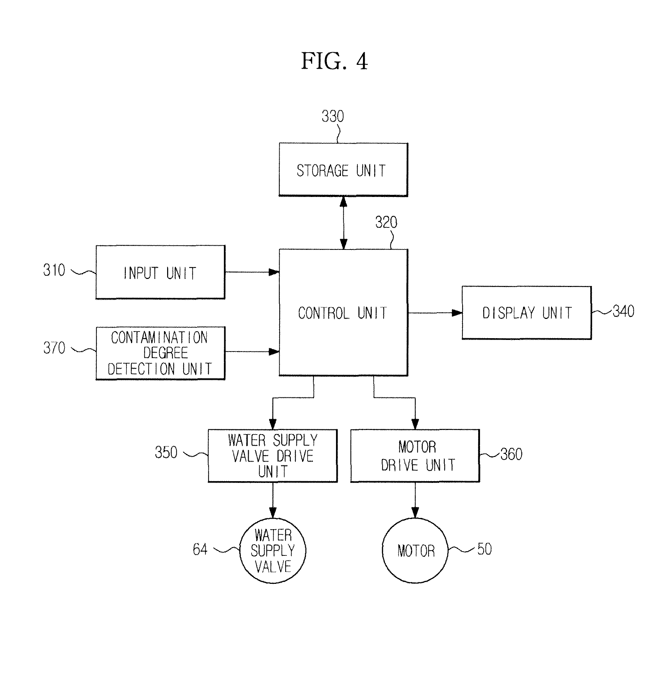

FIG. 4 is a control block diagram of a washing machine in accordance with another embodiment. The washing machine in accordance with this embodiment includes an input unit 310, a control unit 320, a storage unit 330, a display unit 340, a water supply valve drive unit 350, a motor drive unit 360 and a contamination degree detection unit 370. That is, the washing machine in accordance with this embodiment further includes the contamination degree detection unit 370 as compared to the washing machine in accordance with the embodiment of FIGS. 1 to 3.

Here, the input unit 310, the display unit 340, the water supply valve drive unit 350 and the motor drive unit 360 of this embodiment are the same as the input unit 110, the display unit 140, the water supply valve drive unit 150, and the motor drive unit 160 of the former embodiment, and a detailed description thereof will thus be omitted.

The contamination degree detection unit 370 detects a contamination degree of laundry and transmits the detected contamination degree to the control unit 320.

The control unit 320 predicts a kind of the laundry, a material of the laundry, a size of the laundry, a kind of contamination and an amount of contamination based on purpose data of the laundry transmitted through the operation unit used as the input unit 310. During prediction of the kind and material of the laundry and the kind and amount of contamination, the control unit 320 considers the current date, season and weather data.

The control unit 320 reads a barcode or QR code data transmitted through a barcode recognition unit or a QR code recognition unit used as the input unit 310, judges the kind, a material and size of the laundry according to the product name of the laundry, judges the purpose of the laundry according to the kind of the laundry and predicts the kind and amount of contamination based on the judged purpose of the laundry.

The control unit 320 may predict the kind, material and size of the laundry and the kind and amount of contamination based on an image of the laundry obtained through an image unit used as the input unit 310.

Further, the control unit 320 may receive the purpose data of the laundry from the input unit 310 and then control driving of the motor 50 to rotate the drum 40, thereby detecting the weight of the laundry. Thereafter, the control unit 320 may predict the amount of the contamination of the laundry based on the detected weight of the laundry.

The control unit 320 determines an operating course corresponding to the kind and material of the laundry and the kind and amount of contamination and controls driving of the water supply valve and the motor based on the determined operating course, thereby allowing the washing cycle, the rinsing cycle and the spin-drying cycle to be performed according to the determined operating course.

Further, the control unit 320 judges kinds and amounts of detergents corresponding to the kind and material of the laundry and the kind and amount of contamination and controls driving of the display unit 340 so as to display at least one of the judged kinds and amounts of the detergents and a washing temperature. Thereby, a user may put the corresponding detergents into the detergent box 70.

Further, the control unit 320 may control driving of a detergent amount adjustment unit (not shown), thereby allowing the judged amounts of the corresponding detergents to be discharge to the drum 40.

The control unit 320 judges whether or not a washing time needs to be adjusted based on the contamination degree of the wash water transmitted from the contamination degree detection unit 370 during the washing cycle and controls driving of the display unit 340 so that the adjusted washing time is displayed on the display unit 340.

Here, the adjusted washing time is obtained by adding a predetermined adjustment time to the current washing time, if the detected contamination degree of the wash water exceeds a first predicted contamination degree, which is predetermined. Here, the first predicted contamination degree is a predicted contamination degree during the washing cycle according to the operating course corresponding to the purpose of the laundry.

Further, the washing time may be additionally adjusted according to a degree by which the detected contamination degree exceeds the first predicted contamination degree.

The control unit 320 judges whether or not an additional frequency of times of the rinsing cycle needs to be performed based on the contamination degree of the rinse water transmitted from the contamination degree detection unit 370 during the rinsing cycle and controls driving of the display unit 340 so that the additional frequency of times of the rinsing cycle is displayed on the display unit 340.

Here, if the detected contamination degree of the rinse water exceeds a second predicted contamination degree, which is predetermined, one time of the rinsing cycle is added. Here, the second predicted contamination degree is a predicted contamination degree during the rinsing cycle according to the operating course corresponding to the purpose of the laundry. If plural rinsing cycles are performed, second predicted contamination degrees in the respective rinsing cycles are different.

The frequency of times of the rinsing cycle may additionally be adjusted according to a degree by which the detected contamination degree exceeds the second predicted contamination degree.

The storage unit 330 stores operating courses corresponding to relationship among kinds of laundries, materials of laundries, kinds of contamination and amounts of contamination and stores kinds of detergents, amounts of detergents and optimum washing temperatures corresponding to relationship among the kinds of laundries, the materials of laundries, the kinds of contamination and the amounts of contamination.

Here, the operating course includes at least one data selected from mechanical power during the washing cycle, such as an operation factor of the motor and an RPM of the motor, a wash water temperature, a washing time, an amount of wash water, a frequency of times of the rinsing cycle, an amount of rinse water, an intermediate spin-drying velocity, a final spin-drying velocity, an intermediate spin-drying time and a final spin-drying time.

The storage unit 330 stores first predicted contamination degrees and second predicted contamination degrees according to operating courses corresponding to the purpose data of laundries.

Here, the first predicted contamination degree is a value predicting a degree at which contaminants of laundry are mixed with the wash water during the washing cycle, and the second predicted contamination degree is a value predicting a degree at which contaminants of laundry are mixed with the rinse water during the rinsing cycle. That is, the respective predicted contamination degrees are determined by the kind and amount of contamination of the laundry, which are predicted based on the purpose data of the laundry.

The storage unit 330 stores an adjustment time of the washing cycle based on the detected contamination degree of the wash water during the washing cycle, and stores an additional frequency of times of the rinsing cycle based on the detected contamination degree of the rinse water during each rinsing cycle.

That is, the storage unit 330 stores an additional washing time to be added if the detected contamination degree of the wash water exceeds the first predicted contamination degree, and stores an additional frequency of times of the rinsing cycle to be added if the detected contamination degree of the rinse water exceeds the second predicted contamination degree.

Further, the storage unit 330 may store an additional washing time corresponding to the degree by which the detected contamination degree of the wash water exceeds the first predicted contamination degree, and store an additional washing time corresponding to the degree by which the detected contamination degree of the rinse water exceeds the second predicted contamination degree.

As described above, the contamination degrees of the wash water and the rinse water during the washing cycle and the rinsing cycle are detected and the washing time and the frequency of times of the rinsing cycle are adjusted based on the detected contaminated degrees, thereby increasing washing efficiency.

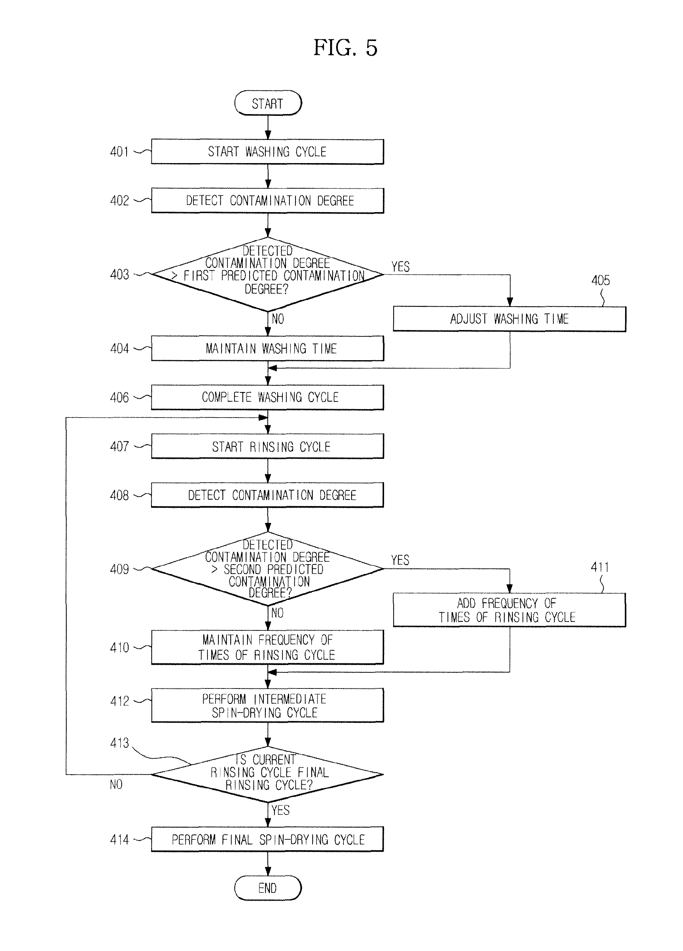

FIG. 5 is a flow chart illustrating a control method of the washing machine in accordance with this embodiment. Hereinafter, the control method will be described with reference to FIGS. 1 and 4.

The control unit 320 receives the purpose data of the laundry and weather, date and season data through corresponding buttons to receive the respective items. Here, the corresponding buttons are provided separately from buttons displayed on the touch screen or the display unit. Further, the washing machine may receive the purpose data of the laundry through operation of the keypad by a user.

Here, the current date and season data may be obtained from the timer (not shown) provided within the washing machine. Here, the current season is judged based on the date data obtained from the timer.

Further, the weather, date and season data may be received in real time through wired/wireless data communication with external equipment.

The purpose data of laundry received by the control unit 320 include kind data of laundry, such as clothing, towels and bedding, and size data of laundry, and further include data regarding ages of wearers, wearing purposes and wearing pattern, if the kind of laundry corresponds to clothing.

Among the purpose data of laundry, clothing is divided into outdoor clothes, work clothes, ordinary clothes, sportswear, underwear, socks and so on according wearing purposes. Work clothes are divided into medical gowns, cosmetic gowns, cooking gowns, military uniforms, police uniforms, school uniforms, dress shirts, repairman uniforms and so on, and sportswear is divided into fitness club uniforms, soccer uniforms, mountaineering wear, baseball uniforms and so on.

Further, the wearing pattern data includes data regarding a wearing time of clothing prior to washing.

Thereafter, the control unit 320 predicts a material of the laundry based on the purpose data of the laundry.

Here, the control unit 320 may predict the material by comparing the purpose data of the laundry with data stored in the storage unit 330.

If the kind of the laundry corresponds to clothing, the control unit 320 may predict a material of the clothing based on age data, and if the control unit 320 receives the purpose data of the laundry, the control unit 320 may predict a material of the laundry by analyzing relationship among at least one data selected from among the current date, season and weather data.

Thereafter, the control unit 320 predicts a kind of contamination of the laundry. Here, the control unit 320 judges whether or not the kind of contamination is water-soluble, fat-soluble, or likely to be colored.

Further, if the laundry corresponds to clothing, the control unit 320 may predict the kind of contamination according to a difference between life environments of ages based on the age data of a wearer.

Thereafter, the control unit 320 predicts an amount of contamination based on the purpose data of the laundry.

Here, the amount of contamination may be predicted based on size data of the laundry received directly from a user, be predicted in consideration of the clothing wearing pattern having wearing time data prior to washing, or be predicted based on data obtained from a barcode or QR code of the laundry.

Further, the control unit 320 may detect the weight of the laundry, and predict the amount of contamination of the laundry based on the detected weight of the laundry.

Thereafter, the control unit 320 determines an operating course corresponding to the kind and material of the laundry and the kind and amount of contamination, and displays the determined operating course on the display unit 340.

During determination of the operating course, the control unit 320 determines a temperature of wash water corresponding to the material of the laundry, determines respective rotating forces during the washing cycle, the rinsing cycle and the spin-drying cycle, and determines a washing time during the washing cycle, respective rinsing times and a frequency of times of the rinsing cycle, and a spin-drying level during the spin-drying cycle.

Further, the control unit 320 judges kinds of detergents based on the kind and material of the laundry and the kind and amount of contamination, and determines amounts of the detergents based on the kind and material of the laundry and the amount of contamination. Here, the judged kinds and amounts of the detergents are displayed on the display unit 340 so that a user recognizes them. Further, a washing temperature is also displayed on the display unit 340.

Thereafter, the control unit 320 drives the water supply valve 64 and the motor 50 based on the operating course, thereby allowing the washing cycle, the rinsing cycle, and the spin-drying cycle to be performed according to the determined operating course.

When the washing cycle is started (operation 401), the control unit 320 detects a contamination degree of wash water during the washing cycle (operation 402), and judges whether or not a washing time needs to be adjusted by analyzing the detected contamination degree of the wash water.

Here, the control unit 320 compares the detected contamination degree of the wash water with a first predicted contamination degree (operation 403), maintains the washing time if the detected contamination degree of the wash water is less than the first predicted contamination degree (operation 404), and performs the washing cycle for the maintained washing time and then completes the washing cycle (operation 406).

On the other hand, the control unit 320 adds an additional washing time to the current washing time so as to adjust the washing time if the detected contamination degree of the wash water exceeds the first predicted contamination degree (operation 405), displays the adjusted washing time on the display unit 340, and performs the washing cycle for the adjusted washing time and then completes the washing cycle (operation 406).

Here, the added washing time need to be a set value, and may be a value in proportion to a degree by which the detected contamination degree exceeds the first predicted contamination degree.

Thereafter, the control unit 320 drives the drain pump 82 to perform the draining cycle when the washing cycle is completed, performs the intermediate spin-drying cycle when the draining cycle is completed, perform a water supplying cycle when the intermediate spin-drying cycle is completed, and performs the rinsing cycle when the water supplying cycle is completed (operation 407).

When the rinsing cycle is started, the control unit 320 detects a contamination degree of rinse water during the rinsing cycle (operation 408), and judges whether or not a frequency of times of the rinsing cycle needs to be adjusted by analyzing the detected contamination degree of the rinse water.

Here, the control unit 320 compares the detected contamination degree of the rinse water with a second predicted contamination degree (operation 409), maintains the frequency of times of the rinsing cycle if the detected contamination degree of the rinse water is less than the second predicted contamination degree, and performs the maintained frequency of times of the rinsing cycle and then completes the rinsing cycle (operation 410).

On the other hand, the control unit 320 adds one time of the rinsing cycle so as to adjust the frequency of times of the rinsing cycle if the detected contamination degree of the rinse water exceeds the second predicted contamination degree, displays the adjusted frequency of times of the rinsing cycle on the display unit 340 (operation 411), and performs the adjusted frequency of times of rinsing cycle and then completes the rinsing cycle (operation 410).

Here, an added frequency of times of the rinsing cycle need not be one time, and may be plural times in proportion to a degree by which the detected contamination degree exceeds the second predicted contamination degree.

Thereafter, the control unit 320 performs the intermediate spin-drying cycle (operation 412) and drives the drain pump 82 to perform the draining cycle when the rinsing cycle is completed.

Thereafter, the control unit 320 judges whether or not the just completed rinsing cycle is a final rinsing cycle (operation 413). The control unit 320 restarts the rinsing cycle (operation 407) if it is judged that the just completed rinsing cycle is not the final rinsing cycle. On the other hand, the control unit 320 performs the final spin-drying cycle if it is judged that the just completed rinsing cycle is the final rinsing cycle (operation 414).

Further, if the detected contamination degree during the washing cycle exceeds the predicted contamination degree according to the operating course corresponding to the purpose of the laundry, both the washing time and the frequency of times of the rinsing cycle may be adjusted.

As is apparent from the above description, in a control method of a washing machine in accordance with one embodiment of the present invention, an operating course is determined by confirming a material of laundry and predicting a kind of contamination of the laundry and an amount of contamination of the laundry based on purpose data of the laundry, thereby performing proper washing of the laundry according to the purpose of the laundry whenever washing of the laundry is performed.

Further, proper washing of the laundry is performed according to the kind and amount of contamination of the laundry, thereby improving utility of the washing machine.

Further, contamination degrees of wash water and rinse water during a washing cycle and a rinsing cycle are detected, and a washing time and a frequency of times of the rinsing cycle are adjusted based on the contamination degrees, thereby increasing washing efficiency.

Moreover, proper amounts of detergents according to the kind and amount of contamination of the laundry are supplied based on the purpose data of the laundry, thereby preventing use of excessive amounts of the detergents and preventing poor washing effects due to insufficient amounts of the detergents. Thereby, the washing effects are improved through use of the proper amounts of the detergents.

Although a few embodiments of the present invention have been shown and described, it would be appreciated by those skilled in the art that changes may be made in these embodiments without departing from the principles of the invention, the scope of which is defined in the claims.

## Claims

1. A control method of a washing machine provided with a drum (40) accommodating laundry, and a motor (50) rotating the drum (40), wherein the control method comprises the steps of:
i.) receiving (201) purpose data of the laundry including a kind and size of the laundry, and in the case when the laundry is clothing, at least one of data of a wearer of the clothing, wearing purpose data, and wearing pattern data from an input unit (110, 310);
ii.) predicting (202, 203, 204) a material of the laundry, a kind of contamination of the laundry, and an amount of contamination of the laundry based on the purpose data of the laundry;
iii.) determining (205) an operating course stored in a storage unit (130, 330) based on the purpose data of the laundry, the material of the laundry, the kind of contamination of the laundry, and the amount of contamination of the laundry; and
iv.) performing (206) a washing cycle, a rinsing cycle, and a spin-drying cycle by controlling the motor 50 according to the determined operating course.

2. The control method according to claim 1, further comprising determining at least one of kinds of detergents and amounts of the detergents based on the predicted material of the laundry and the predicted kind and amount of contamination.

3. The control method according to claim 2, further comprising displaying at least one of the determined kinds and amounts of the detergents and the determined operating course.

4. The control method according to claim 1, wherein the prediction of the amount of contamination of the laundry includes:
detecting a weight of the laundry; and
predicting the amount of contamination of the laundry based on the weight of the laundry.

5. The control method according to claim 1, wherein the determination (205) of the operating course includes determining at least one of an amount of wash water, a washing time, an RPM and an operation factor of a motor during washing, a washing temperature, a frequency of times of rinsing, an amount of rinse water, a spin-drying velocity, and a spin-drying time based on the material of the laundry and the kind and amount of contamination.

6. The control method according to claim 1, further comprising:
receiving at least one data of weather, date, and season data from a user through an input unit (110); wherein in step ii) the purpose data of the laundry is further including at least one data of the weather, date, and season data.

7. The control method according to claim 1, further comprising:
receiving at least one data of weather, date, and season data from external equipment through communication; wherein in step ii) the purpose data of the laundry is further including at least one data of the weather, date, and season data.

8. The control method according to claim 1, further comprising:
judging at least one data of date and season data based on timer data; wherein in step ii) the purpose data of the laundry is further including at least one data of the date and season data.

9. The control method according to claim 1, further comprising:
detecting a contamination degree during control of washing of the laundry according to the determined operating course; and
adjusting at least one of an RPM and an operation factor of a motor during a washing cycle, a washing time, a washing temperature, a frequency of times of a rinsing cycle, an amount of rinse water, and a spin-drying velocity based on the contamination degree.

## Patentansprüche

1. Verfahren zum Steuern einer Waschmaschine, die mit einer Trommel (40), die Wäsche aufnimmt, sowie einem Motor (50) versehen ist, der die Trommel (40) dreht, wobei das Verfahren zum Steuern die folgenden Schritte umfasst:
1) Empfangen (201) von Verwendungszweck-Daten der Wäsche, die eine Art und eine Größe der Wäsche einschließen, und, wenn es sich bei der Wäsche um Kleidung handelt, von Daten zum Träger der Kleidung, Tragezweck-Daten, oder/und Trageprofil-Daten von einer Eingabeeinheit (110, 310);
2) Vorhersagen (202, 203, 204) eines Materials der Wäsche, einer Art der Verschmutzung der Wäsche sowie einer Stärke der Verschmutzung der Wäsche auf Basis der Verwendungszweck-Daten der Wäsche;
3) Bestimmen (205) eines in einer Speichereinheit (130, 330) gespeicherten Funktionsablaufs auf Basis der Verwendungszweck-Daten der Wäsche, des Materials der Wäsche, der Art der Verschmutzung der Wäsche und der Stärke der Verschmutzung der Wäsche; sowie
4) Durchführen (206) eines Waschgangs, eines Spülgangs und eines Schleudergangs durch Steuern des Motors (50) entsprechend dem bestimmten Funktionsablauf.

2. Verfahren zum Steuern nach Anspruch 1, das des Weiteren umfasst, dass Arten von Waschmitteln oder/und Mengen der Waschmittel auf Basis des vorhergesagten Materials der Wäsche und der vorhergesagten Art und Stärke der Verschmutzung bestimmt werden.

3. Verfahren zum Steuern nach Anspruch 2, das des Weiteren umfasst, dass die bestimmten Arten oder/und Mengen der Waschmittel oder/und der bestimmte Funktionsablauf angezeigt werden.

4. Verfahren zum Steuern nach Anspruch 1, wobei das Vorhersagen der Stärke der Verschmutzung der Wäsche einschließt:
Erfassen eines Gewichtes der Wäsche; und
Vorhersagen der Stärke der Verschmutzung der Wäsche auf Basis des Gewichtes der Wäsche.

5. Verfahren zum Steuern nach Anspruch 1, wobei die Bestimmung (205) des Funktionsablaufs einschließt, dass eine Menge an Waschwasser, eine Waschzeit, eine Drehzahl sowie ein Betriebsfaktor eines Motors beim Waschen, eine Waschtemperatur, eine Häufigkeit des Spülens, eine Menge an Spülwasser, eine Schleudergeschwindigkeit oder/und eine Schleuderzeit auf Basis des Materials der Wäsche und der Art sowie der Stärke der Verschmutzung bestimmt wird/werden.

6. Verfahren zum Steuern nach Anspruch 1, das des Weiteren umfasst:
Empfangen von Daten zum Wetter, Datum oder/und Jahreszeit-Daten von einem Benutzer über eine Eingabeeinheit (110), wobei in Schritt 2) die Verwendungszweck-Daten der Wäsche des Weiteren Daten zum Wetter, Datum oder/und Jahreszeit-Daten enthalten.

7. Verfahren zum Steuern nach Anspruch 1, das des Weiteren umfasst:
Empfangen von Daten zum Wetter, Datum oder/und Jahreszeit-Daten von einer externen Einrichtung mittels Übertragung, wobei in Schritt 2) die Verwendungszweck-Daten der Wäsche des Weiteren Daten zum Wetter, Datum oder/und Jahreszeit-Daten enthalten.

8. Verfahren zum Steuern nach Anspruch 1, das des Weiteren umfasst:
Ermitteln von Daten zum Datum oder/und Jahreszeit-Daten auf Basis von Zeitmesser-Daten; wobei in Schritt 2) die Verwendungszweck-Daten der Wäsche des Weiteren Daten zu dem Datum oder/und Jahreszeit-Daten einschließen.

9. Verfahren zum Steuern nach Anspruch 1, das. des Weiteren umfasst:
Erfassen eines Verschmutzungsgrades beim Steuern des Waschens der Wäsche entsprechend dem bestimmten Funktionsablauf; und
Anpassen einer Drehzahl und eines Betriebsfaktors eines Motors während eines Waschgangs, einer Waschzeit, einer Waschtemperatur, einer Häufigkeit eines Spülgangs, einer Menge an Spülwasser oder/und einer Schleudergeschwindigkeit auf Basis des Verschmutzungsgrades.

## Revendications

1. Procédé de commande d'une machine à laver munie d'un tambour (40) recevant le linge et d'un moteur (50) faisant tourner le tambour (40), dans lequel le procédé de commande comprend les étapes consistant à :
i.) recevoir (201) des données d'objectif du linge incluant le type et la quantité de linge, et dans le cas où le linge est constitué de vêtements, au moins des données parmi des données relatives au porteur du linge, des données d'objectif de port et des données de configuration de port depuis une unité d'entrée (110, 310) ;
ii.) prédire (202, 203, 204) la matière du linge, le type de contamination du linge et l'importance de la contamination du linge en se basant sur les données d'objectif du linge ;
iii.) déterminer (205) un programme de fonctionnement mémorisé dans une unité de mémorisation (130, 330) en se basant sur les données d'objectif du linge, la matière du linge, le type de contamination du linge et l'importance de la contamination du linge ; et
iv.) exécuter (206) un cycle de lavage, un cycle de rinçage et un cycle d'essorage en commandant le moteur (50) conformément au programme de fonctionnement déterminé.

2. Procédé de commande selon la revendication 1, comprenant en outre la détermination d'au moins un des types de détergents et des quantités de détergents en se basant sur la matière prédite du linge et le type et l'importance de la contamination prédits.

3. Procédé de commande selon la revendication 2, comprenant en outre l'affichage d'au moins un des types et quantités déterminés des détergents et du programme de fonctionnement déterminé.

4. Procédé de commande selon la revendication 1, dans lequel la prédiction de l'importance de la contamination du linge comporte :
la détection du poids du linge ; et
la prédiction de l'importance de la contamination du linge en se basant sur le poids du linge.

5. Procédé de commande selon la revendication 1, dans lequel la détermination (205) du programme de fonctionnement comporte la détermination d'au moins une grandeur parmi la quantité d'eau de lavage, le temps de lavage, la vitesse de rotation et le facteur de fonctionnement du moteur pendant le lavage, la température de lavage, la fréquence de rinçage, la quantité d'eau de rinçage, la vitesse d'essorage et le temps d'essorage en se basant sur la matière du linge et le type et l'importance de la contamination.

6. Procédé de commande selon la revendication 1, comprenant en outre :
la réception d'au moins des données parmi les conditions météorologiques, la date et des données relatives à la saison depuis un utilisateur par l'intermédiaire d'une unité d'entrée (110) ; dans lequel à l'étape ii), les données d'objectif du linge comportent en outre au moins des données parmi les conditions météorologiques, la date et les données relatives à la saison.

7. Procédé de commande selon la revendication 1, comprenant en outre :
la réception d'au moins des données parmi les conditions météorologiques, la date et les données relatives à la saison depuis un équipement externe par l'intermédiaire d'une communication ; dans lequel, à l'étape ii), les données d'objectif du linge comportent en outre au moins des données parmi les conditions météorologiques, la date et les données relatives à la saison.

8. Procédé de commande selon la revendication 1, comprenant en outre :
l'estimation d'au moins des données parmi la date et les données relatives à la saison en se basant sur les données du programmateur ; dans lequel, à l'étape ii), les données d'objectif du linge comportent en outre au moins des données parmi la date et les données relatives à la saison.

9. Procédé de commande selon la revendication 1, comprenant en outre :
la détection du degré de contamination pendant le contrôle du lavage du linge en fonction du programme de fonctionnement déterminé ; et
le réglage d'au moins une grandeur parmi la vitesse de rotation et le facteur de fonctionnement du moteur pendant un cycle de lavage, le temps de lavage, la température de lavage, la fréquence de rinçage, la quantité d'eau de rinçage et la vitesse d'essorage en se basant sur le degré de contamination.
